# EUROPEAN PATENT SPECIFICATION

(11) **EP 3 755 983 B1**
(45) Date of publication and mention of the grant of the patent: **24.04.2024**
(21) Application number: 19709087.1
(22) Date of filing: 14.02.2019
(51) Int. Cl.: G01M 5/00, G01M 7/06, G01N 29/04

(54) **APPARATUS FOR MEASURING SOUND LEVELS IN A BUILDING**
VORRICHTUNG ZUR MESSUNG VON SCHALLPEGELN IN EINEM GEBÄUDE
APPAREIL DE MESURE DES NIVEAUX SONORES DANS UN BATIMENT

(30) Priority: 19.02.2018 GB 201802726
(43) Date of publication of application: 30.12.2020
(73) Proprietor: Attwood, Peter, Ernest, William, West Sussex PO22 8JH (GB)
(72) Inventor: Attwood, Peter, Ernest, William, West Sussex PO22 8JH (GB)
(74) Representative: Houghton, Mark Phillip
(86) International application number: PCT/GB2019/000026
(87) International publication number: WO 2019/158899

(56) References cited:
- WO-A1-93/21523
- WO-A1-93/21523
- CN-U- 203 310 598
- CN-U- 203 310 598
- DE-A1-102005 030 478
- DE-A1-102005 030 478
- US-A- 5 814 731
- US-A- 5 814 731

## Description

This invention relates to apparatus for measuring impact sound insulation provided by a shared dividing structure comprising a floor of a first room of a building and a ceiling of a second room of the building.

Apparatus is known which is for measuring impact sound insulation provided by a shared dividing structure comprising a floor of a first room of a building and a ceiling of a second room of the building. The known apparatus comprises a tapping machine for generating a tapping sound in the first room of the building. The known apparatus also comprises sound measuring means for measuring the level of the sound in the second room in the building, with the second room being underneath the first room and such that the first and second rooms form a room pair with the shared dividing structure comprising the floor of the first room and the ceiling of the second room. The known apparatus also comprises mounting means for mounting the tapping machine on the floor of the first room.

In order to obtain meaningful measurements, the tapping machine has to be operated in a plurality of random positions on the floor of the first room of the building. Current regulations in the United Kingdom require the tapping machine to be operated in at least four random positions on the floor of the first room of the building. The requirement for random positioning of the tapping machine on the floor of the first room of the building typically requires the apparatus to be operated by two persons. A first person randomly positions and operates the tapping machine in the first room of the building, and a second person operates the sound measuring means in the second room of, the building. The requirement for two persons is often not convenient in that only one person may be available. In addition, the requirement for two persons typically costs double what it would cost for one person.

Sometimes the known apparatus is operated by one person. In this case, the person has to keep moving between the first and the second rooms in order to position and set up the tapping machine at a required random position in the first room, and then walk to the second room to operate a remote controlled 'on' switch and the sound measuring means. Often the first and second rooms in a room pair are not conveniently accessible and it may be necessary for the person to walk a considerable distance in order to gain access to the first and the second rooms. In addition to being frustrating and tiring, the time taken to walk between the first and the second rooms may cause time costs to be similar to the time costs of employing two persons.

It is an aim of the present invention to avoid or reduce the above mentioned problem.

WO9321523 A1 discloses a compact and portable device for non-destructive acoustic test of solid surfaces such as building walls. In particular, the patent document discloses all technical features of the preamble of claim 1. Other prior art documents relevant to this invention are patent documents CN 203 310 598 U, DE 10 2005 030478 A1 and US 5 814 731 A.

The present invention provides an apparatus for measuring impact sound insulation as claimed in claim 1.

The apparatus of the present invention is advantageous in that it is able to be operated by one person. This avoids the above mentioned problem with the known apparatus when it is operated by two persons. The apparatus of the present invention also avoids the above mentioned problem with the known apparatus when it is operated by a single person. With the apparatus of the present invention, a single person in the second room of the room pair is able to operate the tapping machine in the first room of the room pair, this being done by using the remote control means to control the mover means to cause the tapping machine to move to required random positions over the floor of the first room.

The apparatus of the present invention may be one in which the mounting means is a part of the tapping machine. Additionally or alternatively the mover means may be a part of the tapping machine.

If desired, the apparatus of the present invention may include a cradle for the tapping machine.

When the apparatus of the present invention includes a cradle for the tapping machine, then the mounting means may be a part of the cradle. Additionally or alternatively, the mover means may be a part of the cradle.
Generally, when the cradle is employed, then one or more parts of the apparatus that would normally be on the mounting means may instead be on the cradle.

In all embodiments of the present invention, the mounting means may comprise a plurality of feet. These may be four feet, for example one at each of four corners of the tapping machine. More or less than four feet may be employed. If desired, the mounting means may be a central elongate mounting structure rather than a plurality of feet.

The mover means may comprise wheels for enabling the apparatus to be movable over the floor of the first room. The wheels may be Mecanum wheels, Universal wheels or plain wheels. The Mecanum wheels enable the apparatus to be moved forwards and backwards, and at various angles in a horizontal plane.

Alternatively, the mover means may comprise endless tracks for enabling the apparatus to be movable over the floor of the first room. Other types of mover means may be employed.

In the invention, the apparatus includes a lowering and raising means for causing the mounting means to be lowered to a first position in which the mounting means contacts the floor of the first room when measurement of the level of the sound in the second room is to take place, and to be raised to a second position in which the mounting means does not contact the floor of the first room when movement of the tapping machine over the floor of the first room is to take place.

The lowering and raising means may be a part of the tapping machine.

Alternatively, the lowering and raising means may be a part of the cradle. Alternatively, the lowering and raising means may be another part of the apparatus.

The lowering and raising means may comprise meshing gear teeth or a cam arrangement. Other types of lowering and raising means may be employed.

The remote control means may include a processor which is programmed with random positions for the tapping machine on the floor of the first room.

Additionally, or alternatively, the remote control means may comprise a screen with X and Y co-ordinates for use in moving the tapping machine to random positions on the floor of the first room. Currently the tapping machine needs to be moved to at least four random positions in order to comply with current United Kingdom regulations. The tapping machine could however be moved to more or less random positions in dependence on other requirements, for example regulations in other countries.

The apparatus may be one in which the remote control means is a part of a mobile telephone, and in which the control means is then in the form of an App. on the mobile telephone. Alternatively, the control means may be a dedicated control means. The dedicated control means would then only be for use in operating the tapping machine.

The apparatus may include a camera for enabling the person to see a view from the tapping machine when the tapping machine is in the first room and the person is in the second room. The camera may be mounted on the tapping machine. The camera may be mounted elsewhere if desired, for example on the cradle if a cradle is employed.

Embodiments of the invention will now be described solely by way of example and with reference to the accompanying drawings in which:
Figure 1 shows known apparatus for measuring impact sound insulation provided by a shared dividing structure comprising a floor of a first room of a building and a ceiling of a second room of the building, with the known apparatus being shown in use in the building;
Figure 2 is a perspective view of a known tapping machine forming part of the known apparatus shown in Figure 1;
Figure 3 is a perspective view of the tapping machine shown in Figure 2 but with a cover removed in order to show operation of the tapping machine;
Figure 4 is a view like Figure 1 but shows first apparatus of the present invention for measuring impact sound insulation provided by a shared dividing structure comprising a floor of a first room of a building and a ceiling of a second room of the building, with the first apparatus of the present invention being shown in use in the building;
Figure 5 is a perspective view like Figure 2 but shows a tapping machine forming part of the first apparatus of the present invention shown in Figure 4;
Figure 6 is a perspective view like Figure 3 but shows the tapping machine used in the first apparatus of the present invention;
Figure 7 is a perspective view like Figure 5 but shows a second tapping machine for use in second apparatus of the present invention for measuring impact sound insulation provided by a shared dividing structure comprising a floor of a first room of a building and a ceiling of a second room of the building; and
Figure 8 is a perspective view of a third tapping machine for use in third apparatus of the present invention for measuring impact sound insulation provided by a shared dividing structure comprising a floor of a first room of a building and a ceiling of a second room of the building.

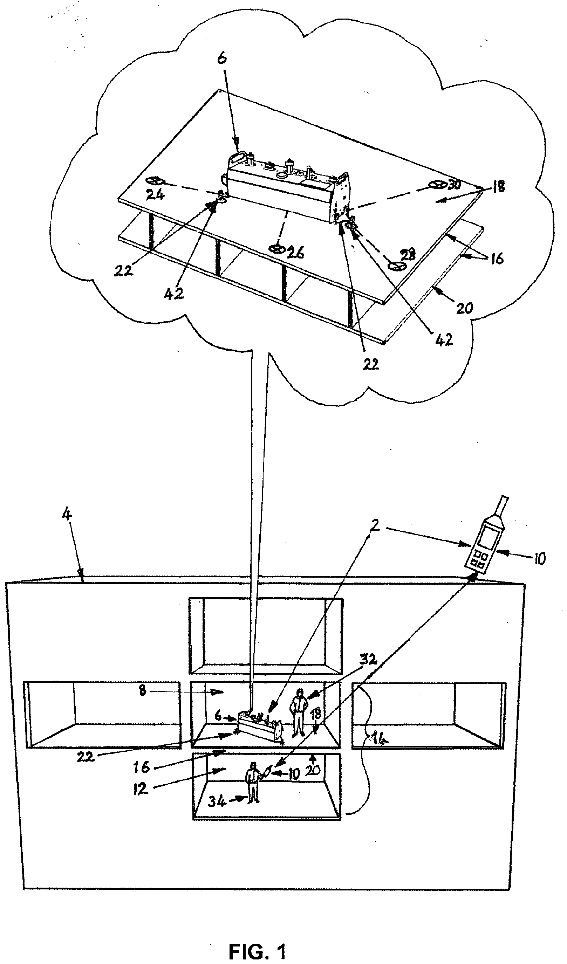

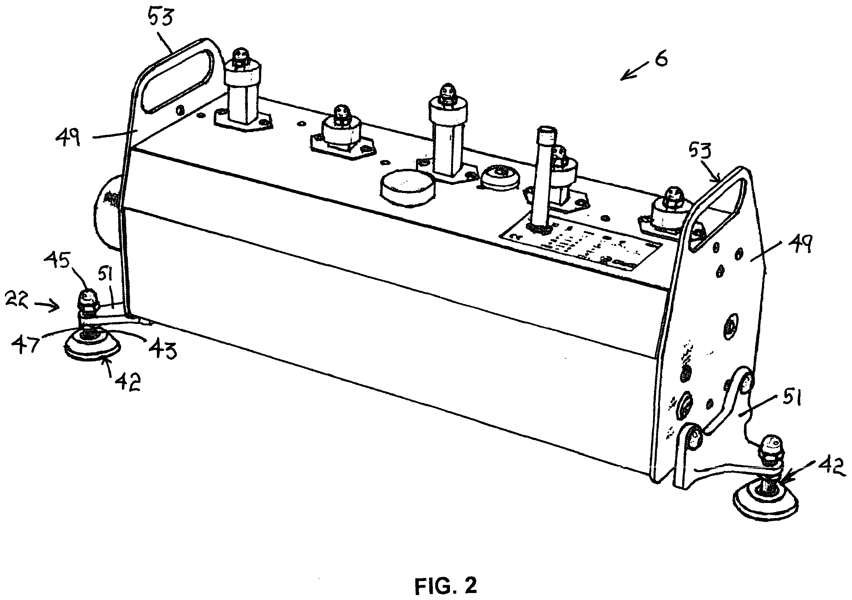

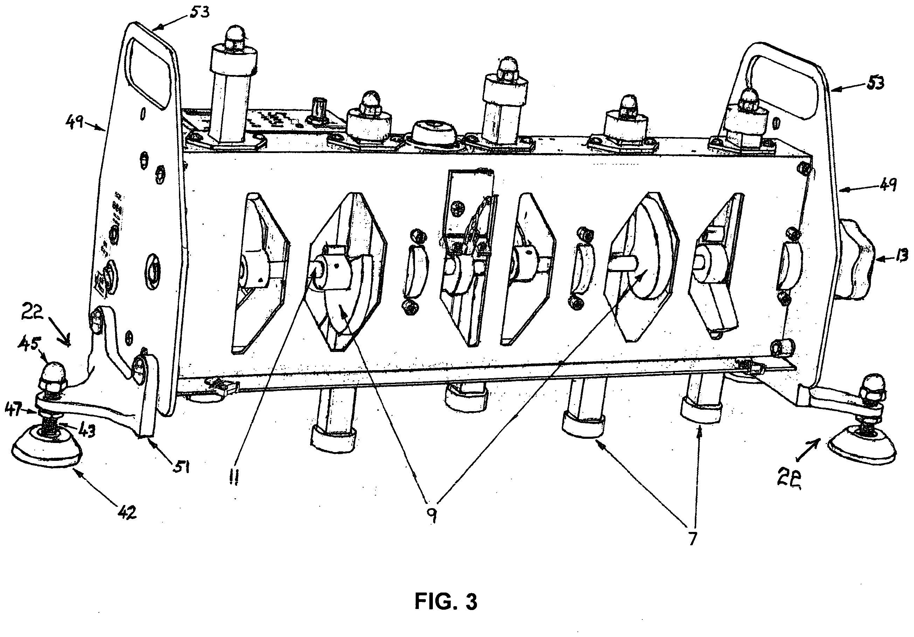

Referring to Figures 1 - 3, there is shown known apparatus 2 for measuring impact sound insulation provided by a shared dividing structure 16 comprising a floor 18 of a first room 8 of a building 4 and a ceiling 20 of a second room 12 of the building 4. The apparatus 2 comprises a tapping machine 6 for generating sound in the first room 8 of the building 4. The tapping machine 6 is a known tapping machine 6. The tapping is effected by hammers 7 which are raised by cams 9 and allowed to fall under gravity. The cams 9 operate on a common shaft 11. The shaft 11 can be rotated by hand for setup purposes by using an adjuster knob 13.

The apparatus 2 also comprises sound measuring means 10 which is separate from the tapping machine 6 and which is for measuring the level of sound in the second room 12 in the building 4. The second room 12 is underneath the first room 8 such that the first and second rooms 8, 12 form a room pair 14 with the shared dividing structure 16 comprising the floor 18 of the first room 8 and the ceiling 20 of the second room 12.

The apparatus 2 further comprises mounting means 22 for mounting the tapping machine 6 on the floor 18 of the first room 8.

In order to obtain meaningful measurements, the tapping machine 6 is operated in four random positions 24, 26, 28, 30 on the floor 18 of the first room 8 of the building 4. A first person 32 moves the tapping machine 6 to the random positions 24, 26, 28, 30. In each random position 24, 26, 28, 30 the first person 32 operates the tapping machine 6 to cause tapping sounds on the floor 18 of the first room 8. These tapping sounds are measured by a second person 34 in the second room 12. The second person 34 carries out the sound measurements by operating the sound measuring means 10. The first and second persons 32, 34 may try and stay in communication with each other by shouting or by the use of walkie talkie radios. If this is not possible, then the first person 32 may move the tapping machine 6 to chosen ones of the random positions 24, 26, 28, 30 after a predetermined operation time of the sound measuring means 10, with this predetermined operation time being sufficient to allow the second person 34 to operate the sound measuring means 10 and obtain the required sound measurements in each of the positions 24, 26, 28, 30. The sound measurements are recorded in the sound measuring means 10.

The apparatus 2 is often not convenient in that only one person may be available. In addition, if two persons are available, then the requirement for the two persons typically costs double what it would cost for one person. If only one person is available for operating the apparatus 2, then this person has to keep moving between the first and second rooms 8, 12 in order to position and set up the tapping machine at the required random positions 24, 26, 28, 30 in the first room 8. The person then has to operate the tapping machine 6 to cause the tapping machine 6 to generate the tapping sounds. This may also be done by the use of an 'on' switch remote control when the person has entered the second room 12. Either way, the person has to walk to the second room 12 in order to operate the sound measuring means 10. Often the first and second rooms 8, 12 in the room pair 14 are not conveniently accessible. In this case, it may be necessary for the person to walk a considerable distance in order to gain access to the first and second rooms 8, 12. This can be frustrating and tiring for the person. In addition, the time taken to walk between the first and second rooms 8, 12 may cause time costs to be similar to the time costs of employing two persons.

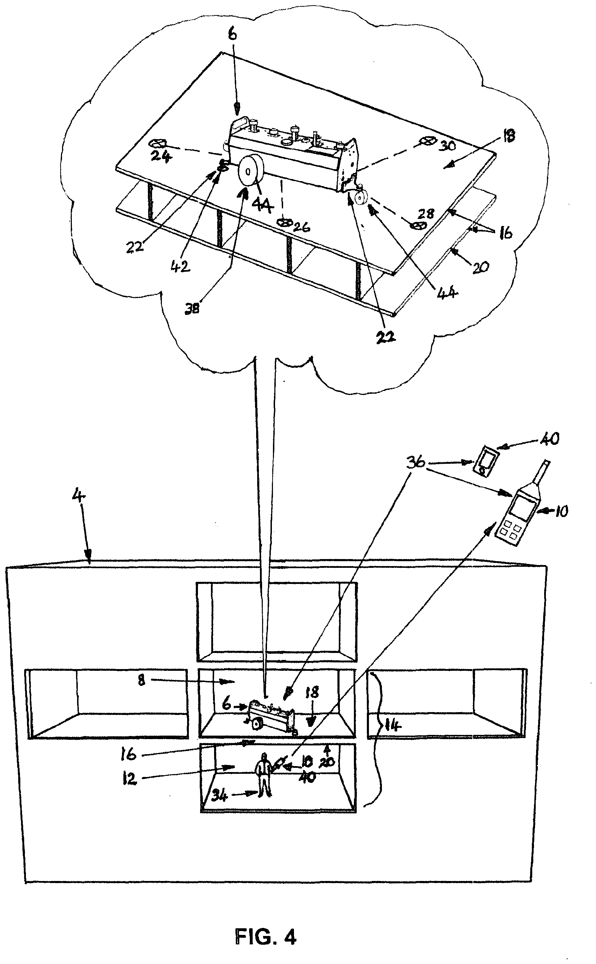

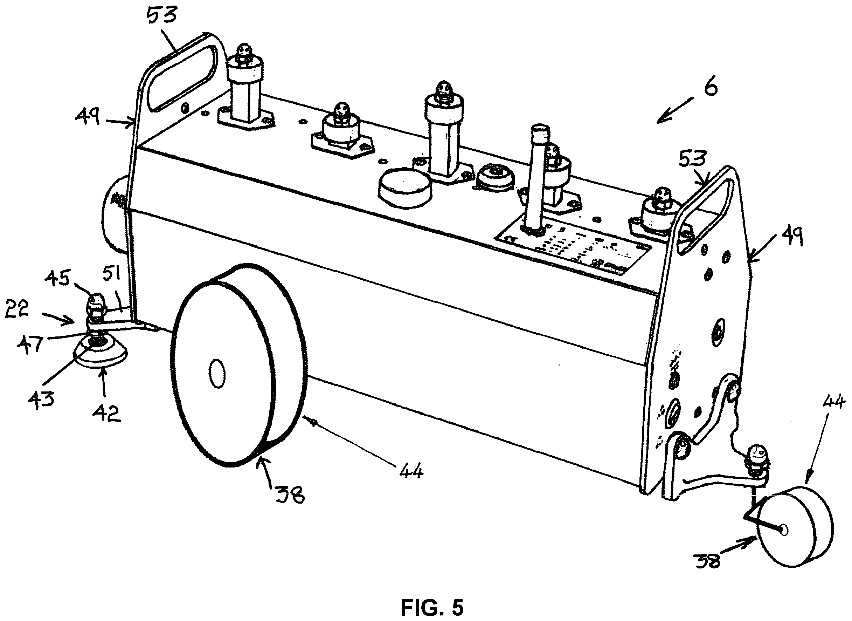

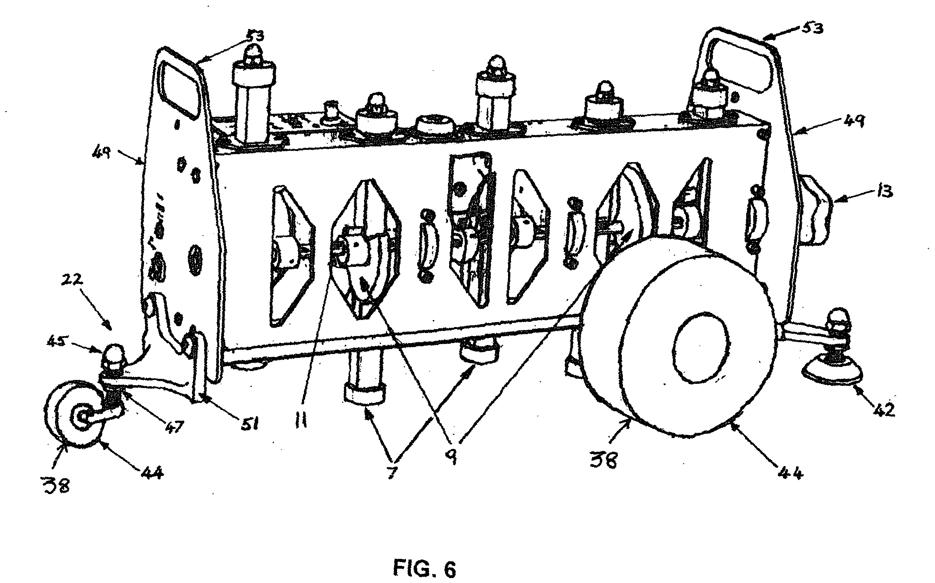

Referring now to Figures 4 - 6, there is shown first apparatus 36 of the present invention for measuring impact sound insulation provided by a shared dividing structure comprising a floor of a first room of a building and a ceiling of a second room of the building, with the apparatus 36 being shown in use in the building 4. Figures 4 - 6 are like Figures 1 - 3 for ease of comparison and understanding. Similar parts in the apparatus 2 and 36 have also been given the same reference numerals for ease of comparison and understanding.

The apparatus 36 is such that it includes mover means 38 by which the tapping machine 6 is movable over the floor 18 of the first room 8.

The apparatus 36 is such that it also includes remote control means 40 for remotely controlling operation of the mover means 38 over the floor 18 of the first room 8. The apparatus 36 is such that in use the tapping machine 6, the mounting means 22 and the mover means 38 are in the first room 8, the sound measuring means 10 is in the second room 12, and a person 34 who is in the second room 12 is able to control movement of the tapping machine 6 over the floor 18 of the first room 8.

The mounting means 22 is a part of the tapping machine 6. The mover means 38 is also a part of the tapping machine 6.

The mounting means 22 comprises a plurality of feet 42. The feet 42 have a screw-threaded portion 43 and locking nuts 45, 47. This enables the feet 42 to be individually adjustable in height with respect to the remainder of the tapping machine 6. The tapping machine 6 can thus stably be mounted on the floor 18, even if the floor 18 is slightly uneven. The feet 42 are secured to frame parts 49 of the tapping machines 6 by means of brackets 51.

The tapping machine 6 is able to be carried by handle formations 53 in the frame parts 49 as shown.

The mover means 38 comprises wheels 44 for enabling the tapping machine 6 to be movable over the floor 18 of the first room 8. The wheels 44 may be Mecanum wheels or Universal wheels. Such wheels are specifically configured for enabling random movement in many directions.

The remote control means 40 includes a processor which is programmed with random positions for the tapping machine 6 on the floor 18 of the first room 8. The remote control means 40 may include a screen with X and Y co-ordinates for use in moving the tapping machine 6 to the random positions 24, 26, 28, 30 on the floor 18 of the first room 8. The remote control means 40 may be a dedicated remote control means 40 or it may be a mobile telephone with a dedicated App. The remote control means 40 is used in conjunction with the sound measuring means 10.

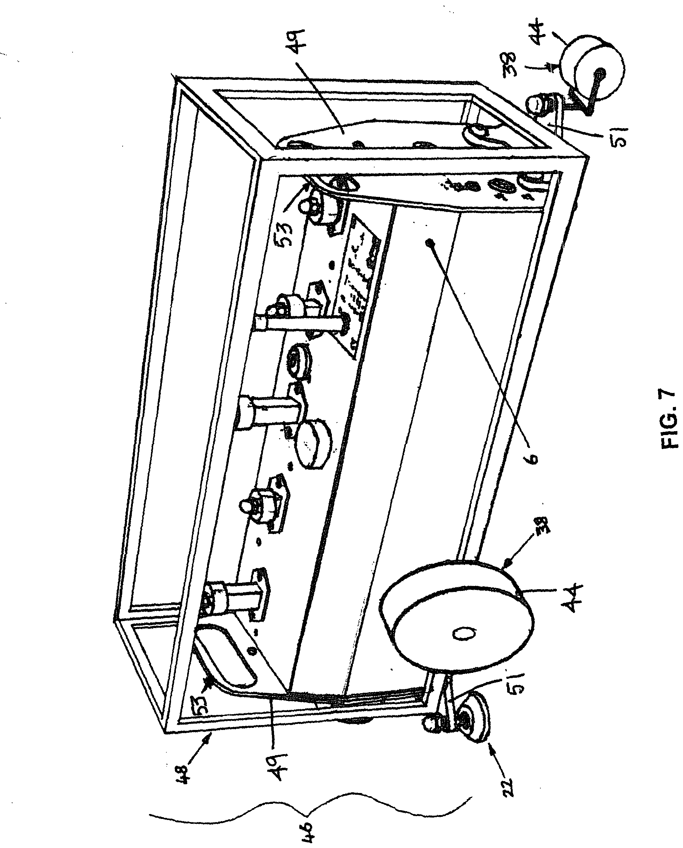

Referring now to Figure 7, there is shown part of second apparatus 46 of the present invention for measuring impact sound insulation provided by a shared dividing structure comprising a floor of a first room of a building and a ceiling of a second room of the building. The second apparatus 46 includes a cradle 48 for the tapping machine 6. The mounting means 22 may be part of the cradle 48 (as shown) or it may be part of the tapping machine 6. The mover means 38 is also part of the cradle 48.

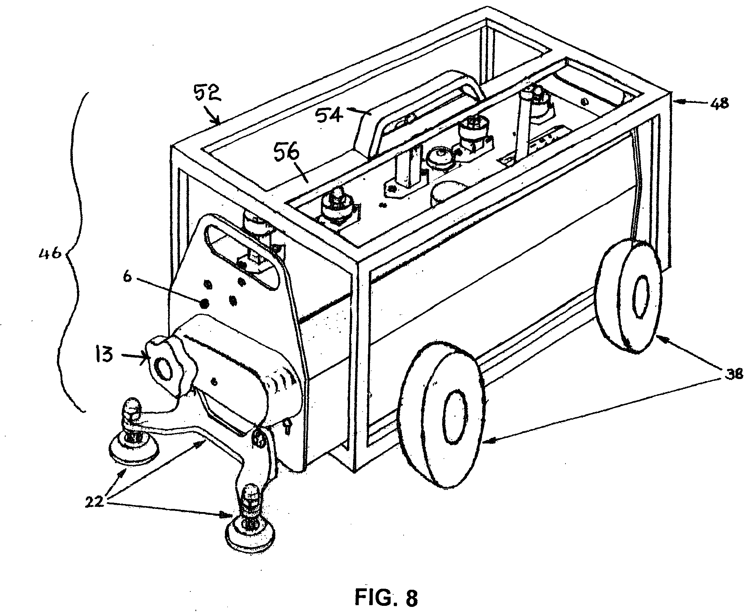

Referring now to Figure 8, there is shown part of third apparatus 50 of the present invention for measuring impact sound insulation provided by a shared dividing structure comprising a floor of a first room of a building and a ceiling of a second room of the building. The apparatus 50 has a cradle 52 having a handle 54 on a central bar 56. The mover means 38 are mounted on the cradle 52 as shown.

It is to be appreciated that the embodiments of the invention described above with reference to the accompanying drawings have been given by way of example only and that modifications may be effected. Thus, for example, different types of tapping machines 6, sound measuring means 10 and mounting means 22 may be employed. Only one of the mounting means 22 and the mover means 38 could be on the cradle 48, with the other one of the mounting means 22 and the mover means 38 being on the tapping machine 6. The wheels 44 may alternatively be wheels of other configurations, or casters or rollers. The apparatus 36, 46 includes lowering and raising means for causing the mounting means 22 to be lowered to a first position in which the mounting means 22 contacts the floor 18 of the first room 8 when measurement of the level of sound in the second room 12 is to take place, and to be raised to a second position in which the mounting means 22 does not contact the floor 18 of the first room 8 when movement of the tapping machine 6 over the floor 18 of the first room 8 is to take place. The lowering and raising means may be a part of the tapping machine 6 or part of the cradle 48. Any suitable and appropriate type of lowering and raising means may be employed, for example a lowering and raising means comprising meshing gear teeth or a cam arrangement.

The tapping machine 6 may be operated by one or more batteries and/or mains electricity. The tapping machine 6 may be fitted with sensors which are capable of sensing the proximity of the tapping machine 6 to room boundaries or other objects within the first room 8. This allows confidence on the part of the person that each test position for the tapping machine 6 complies with official requirements which may include, for example, a minimum distance from floor boundaries of 0.5metres. The tapping machine 6 and/or a processor in the remote control means 40 and any coupled devices may also transmit images to the person 34 so that the person 34 can see where in the first room 8 the tapping machine 6 is actually situated at any one time.

## Claims

1. Apparatus (36) for measuring impact sound insulation provided by a shared dividing structure (16) comprising a floor (18) of a first room (8) of a building (4) and a ceiling (20) of a second room (12) of the building (4), which apparatus (36) comprises:
(i) a tapping machine (6) for generating a tapping sound on the floor (18) of the first room (8) of the building (4);
(ii) sound measuring means (10) which is separate from the tapping machine (6) and which is for measuring the level of the sound in the second room (12) in the building (4), with the second room (12) being underneath the first room (8) and such that the first and second rooms (8, 12) form a room pair (14) with the shared dividing structure (16) comprising the floor (18) of the first room (8) and the ceiling (20) of the second room (12); and
(iii) mounting means (22) for mounting the tapping machine (6) on the floor (18) of the first room (8),
(iv) the apparatus (36) includes mover means (38) by which the tapping machine (6) is movable over the floor (18) of the first room (8);
(v) the apparatus (36) includes remote control means (40) for remotely controlling operation of the mover means (38) over the floor (18) of the first room (8); and
(vi) the apparatus (36) is such that in use the tapping machine (6), the mounting means (22) and the mover means (38) are in the first room (8), the second measuring means (10) is in the second room (12), and a person who is in the second room (12) is able to control movement of the tapping machine (6) over the floor (18) of the first room (8); the apparatus (36) **characterised in that** it further includes lowering and raising means for causing the mounting means (22) to be lowered to a first position in which the mounting means (22) contacts the floor (18) of the first room (8) when measurement of the level of the sound in the second room (12) is to take place, and to be raised to a second position in which the mounting means (22) does not contact the floor (18) of the first room (8) when movement of the tapping machine (6) over the floor (18) of the first room (8) is to take place.

2. Apparatus (36) according to claim 1 in which the mounting means (22) is a part of the tapping machine (6) and/or the mover means (38) is a part of the tapping machine (6).

3. Apparatus (36) according to claim 1 or claim 2 and including a cradle (48) for the tapping machine (6).

4. Apparatus (36) according to claim 3 in which the mounting means (22) is a part of the cradle (48) and/or the mover means (38) is a part of the cradle (48).

5. Apparatus (36) according to any one of the preceding claims in which the mover means (38) comprises wheels (44) for enabling the apparatus (36)to be movable over the floor (18) of the first room (8), or endless tracks for enabling the apparatus (36) to be movable over the floor (18) of the first room (8).

6. Apparatus (36) according to claim 1 in which the lowering and raising means is a part of the tapping machine (6).

7. Apparatus (36) according to claim 3 in which the lowering and raising means is a part of the cradle (48).

8. Apparatus (36) according to any one of claims 1, 6 or 7 in which the lowering and raising means comprises meshing gear teeth or a cam arrangement.

9. Apparatus (36) according to any one the preceding claims in which the remote control means (40) includes a processor which is programmed with random positions for the tapping machine (6) on the floor (18) of the first room (8).

10. Apparatus (36) according to any one of the preceding claims in which the remote control means (40) includes a screen with X and Y co-ordinates for use in moving the tapping machine (6) to random positions on the floor (18) of the first room (8).

11. Apparatus (36) according to any one of the preceding claims in which the remote control means (40) is a part of a mobile telephone, and wherein the remote control means (40) is then in the form of an App. on the mobile telephone.

12. Apparatus (36) according to any one of claims 1 to 10 in which the remote control means (40) is a dedicated remote control means (40).

13. Apparatus (36) according to any one of the preceding claims and including a camera for enabling the person to see the position of the tapping machine (6) when the tapping machine (6) is in the first room (8) and the person is in the second room (12).

14. Apparatus (36) according to claim 13 in which the camera is mounted on the tapping machine (6).

## Patentansprüche

1. Vorrichtung (36) zum Messen von Trittschalldämmung, die durch eine gemeinsame Trennstruktur (16) bereitgestellt wird, die einen Boden (18) eines ersten Raums (8) eines Gebäudes (4) und eine Decke (20) eines zweiten Raums (12) des Gebäudes (4) umfasst, wobei die Vorrichtung (36) umfasst:
(i) eine Klopfmaschine (6) zum Erzeugen eines Klopfgeräusches auf dem Boden (18) des ersten Raumes (8) des Gebäudes (4);
(ii) ein von der Klopfmaschine (6) separiertes Schallmessmittel (10) zum Messen des Schallpegels im zweiten Raum (12) des Gebäudes (4), wobei sich der zweite Raum (12) unterhalb des ersten Raums (8) befindet und der erste und der zweite Raum (8, 12) ein Raumpaar (14) bilden, wobei die gemeinsame Trennstruktur (16) den Boden (18) des ersten Raums (8) und die Decke (20) des zweiten Raums (12) umfasst; und
(iii) ein Befestigungsmittel (22) zum Befestigen der Klopfmaschine (6) auf dem Boden (18) des ersten Raumes (8),
(iv) wobei die Vorrichtung (36) ein Bewegungsmittel (38) einschließt, mit der die Klopfmaschine (6) über den Boden (18) des ersten Raums (8) bewegt werden kann;
(v) wobei die Vorrichtung (36) ein Fernsteuerungsmittel (40) zum ferngesteuerten Betrieb des Bewegungsmittels (38) über dem Boden (18) des ersten Raums (8) einschließt; und
(vi) wobei die Vorrichtung (36) so beschaffen ist, dass sich im Gebrauch die Klopfmaschine (6), das Befestigungsmittel (22) und das Bewegungsmittel (38) im ersten Raum (8) befinden, das Schallmessmittel (10) sich im zweiten Raum (12) befindet und eine Person, die sich im zweiten Raum (12) befindet, die Bewegung der Klopfmaschine (6) über den Boden (18) des ersten Raums (8) steuern kann;
wobei die Vorrichtung (36), **dadurch gekennzeichnet ist, dass** sie weiter ein Absenk- und Anhebemittel umfasst, um zu bewirken, dass das Befestigungsmittel (22) in eine erste Position abgesenkt wird, in der das Befestigungsmittel (22) den Boden (18) des ersten Raums (8) berührt, wenn die Messung des Schallpegels im zweiten Raum (12) stattfinden soll, und in eine zweite Position angehoben werden kann, in der das Befestigungsmittel (22) den Boden (18) des ersten Raums (8) nicht berührt, wenn die Klopfmaschine (6) über den Boden (18) des ersten Raums (8) bewegt werden soll.

2. Vorrichtung (36) nach Anspruch 1, bei der das Befestigungsmittel (22) ein Teil der Klopfmaschine (6) ist und/oder das Bewegungsmittel (38) ein Teil der Klopfmaschine (6) ist.

3. Vorrichtung (36) nach Anspruch 1 oder Anspruch 2 mit einem Gestell (48) für die Klopfmaschine (6).

4. Vorrichtung (36) nach Anspruch 3, bei der das Befestigungsmittel (22) ein Teil des Gestells (48) ist und/oder das Bewegungsmittel (38) ein Teil des Gestells (48) ist.

5. Vorrichtung (36) nach einem der vorhergehenden Ansprüche, bei der das Bewegungsmittel (38) Räder (44) umfasst, um die Vorrichtung (36) über den Boden (18) des ersten Raumes (8) bewegen zu können, oder endlose Schienen, um die Vorrichtung (36) über den Boden (18) des ersten Raumes (8) bewegen zu können.

6. Vorrichtung (36) nach Anspruch 1, bei der das Absenk- und Hebemittel ein Teil der Klopfmaschine (6) ist.

7. Vorrichtung (36) nach Anspruch 3, bei der das Absenk- und Hebemittel ein Teil des Gestells (48) ist.

8. Vorrichtung (36) nach einem der Ansprüche 1, 6 oder 7, bei der das Absenk- und Hebemittel eine ineinandergreifende Verzahnung oder eine Nockenanordnung umfasst.

9. Vorrichtung (36) nach einem der vorhergehenden Ansprüche, bei der das Fernsteuerungsmittel (40) einen Prozessor einschließt, der mit zufälligen Positionen für die Klopfmaschine (6) auf dem Boden (18) des ersten Raums (8) programmiert ist.

10. Vorrichtung (36) nach einem der vorhergehenden Ansprüche, bei der das Fernsteuerungsmittel (40) einen Bildschirm mit X- und Y-Koordinaten zur Verwendung beim Bewegen der Klopfmaschine (6) zu zufälligen Positionen auf dem Boden (18) des ersten Raums (8) einschließt.

11. Vorrichtung (36) nach einem der vorhergehenden Ansprüche, wobei das Fernsteuerungsmittel (40) ein Teil eines Mobiltelefons ist, und wobei das Fernsteuerungsmittel (40) dann in Form einer App auf dem Mobiltelefon vorliegt.

12. Vorrichtung (36) nach einem der Ansprüche 1 bis 10, bei dem das Fernsteuerungsmittel (40) ein dediziertes Fernsteuerungsmittel (40) ist.

13. Vorrichtung (36) nach einem der vorhergehenden Ansprüche, welche eine Kamera einschließt, die es der Person ermöglicht, die Position der Klopfmaschine (6) zu sehen, wenn die Klopfmaschine (6) in dem ersten Raum (8) ist und die Person in dem zweiten Raum (12) ist.

14. Vorrichtung (36) nach Anspruch 13, bei der die Kamera an der Klopfmaschine (6) befestigt ist.

## Revendications

1. Appareil (36) pour mesurer l'isolation acoustique contre les bruits d'impact fournie par une structure de division partagée (16) comprenant un plancher (18) d'une première pièce (8) et un plafond (20) d'une seconde pièce (12) du bâtiment (4), lequel appareil (36) comprend :
(i) une machine à choc (6) destinée à générer un son d'impact sur le plancher (18) de la première pièce (8) du bâtiment (4) ;
(ii) des moyens (10) de mesure sonore qui sont séparés de la machine à choc (6) et qui sont destinés à mesurer le niveau sonore dans la seconde pièce (12) dans le bâtiment (4), la seconde pièce (12) se trouvant sous la première pièce (8) et de sorte que les première et seconde pièces (8, 12) forment une paire de pièces (14) avec la structure de division partagée (16) comprenant le plancher (18) de la première pièce (8) et le plafond (20) de la seconde pièce (12) ; et
(iii) des moyens de montage (22) destinés à monter la machine à choc (6) sur le plancher (18) de la première pièce (8),
(iv) l'appareil (36) comporte des moyens de déplacement (38) grâce auxquels la machine à choc (6) est mobile sur le plancher (18) de la première pièce (8) ;
(v) l'appareil (36) comporte des moyens (40) de commande à distance destinés à commander à distance le fonctionnement des moyens de déplacement (38) sur le plancher (18) de la première pièce (8) ; et
(vi) l'appareil (36) est tel que, en utilisation, la machine à choc (6), les moyens de montage (22) et les moyens de déplacement (38) sont situés dans la première pièce (8), les moyens (10) de mesure sonore sont situés dans la seconde pièce (12), et une personne (34) qui se trouve dans la seconde pièce (12) peut commander le déplacement de la machine à choc (6) sur le plancher (18) de la première pièce (8),
l'appareil (36) étant **caractérisé en ce qu'**il comporte en outre des moyens d'abaissement et de levage destinés à amener les moyens de montage (22) à s'abaisser jusqu'à une première position dans laquelle les moyens de montage (22) entrent en contact avec le plancher (18) de la première pièce (8) lorsque la mesure du niveau sonore dans la seconde la pièce (12) doit avoir lieu, et à être levés jusqu'à une seconde position dans laquelle les moyens de montage (22) n'entrent pas en contact avec le plancher (18) de la première pièce (8) lorsque le mouvement de la machine à choc (6) sur le plancher (18) de la première pièce (8) doit avoir lieu.

2. Appareil (36) selon la revendication 1, dans lequel les moyens de montage (22) font partie de la machine à choc (6) et/ou les moyens de déplacement font partie de la machine à choc (6).

3. Appareil (36) selon la revendication 1 ou la revendication 2 et comportant un berceau (48) destiné à la machine à choc (6).

4. Appareil (36) selon la revendication 3, dans lequel les moyens de montage (22) font partie du berceau (48) et/ou les moyens de déplacement (38) font partie du berceau (48).

5. Appareil (36) selon l'une quelconque des revendications précédentes, dans lequel les moyens de déplacement (38) comprennent des roues (44) pour permettre à l'appareil (36) d'être mobile sur le plancher (18) de la première pièce (8), ou des chenilles pour permettre à l'appareil (36) d'être mobile sur le plancher (18) de la première pièce (8).

6. Appareil (36) selon la revendication 1, dans lequel les moyens d'abaissement et de levage font partie de la machine à choc (6).

7. Appareil (36) selon la revendication 3, dans lequel les moyens d'abaissement et de levage font partie du berceau (48).

8. Appareil (36) selon l'une quelconque des revendications 1, 6 ou 7, dans lequel les moyens d'abaissement et de levage comprennent une denture en engrènement ou un agencement de cames.

9. Appareil (36) selon l'une quelconque des revendications précédentes, dans lequel les moyens (40) de commande à distance comportent un processeur qui est programmé avec des positions aléatoires pour la machine à choc (6) sur le plancher (18) de la première pièce (8).

10. Appareil (36) selon l'une quelconque des revendications précédentes, dans lequel les moyens (40) de commande à distance comportent un écran avec des coordonnées X et Y destiné à être utilisé pour déplacer la machine à choc (6) vers des positions aléatoires sur le plancher (18) de la première pièce (8).

11. Appareil (36) selon l'une quelconque des revendications précédentes, dans lequel les moyens (40) de commande à distance font partie d'un téléphone mobile, et dans lequel les moyens (40) de commande à distance se présentent alors sous la forme d'une application sur le téléphone mobile.

12. Appareil (36) selon l'une quelconque des revendications 1 à 10, dans lequel les moyens (40) de commande à distance sont des moyens (40) de commande à distance dédiés.

13. Appareil (36) selon l'une quelconque des revendications précédentes et comportant un dispositif de prise de vue pour permettre à la personne de voir la position de la machine à choc (6) lorsque la machine à choc (6) est dans la première pièce (8) et que la personne est dans la seconde pièce (12).

14. Appareil (36) selon la revendication 13, dans lequel le dispositif de prise de vue est monté sur la machine à choc (6).
